# EUROPÄISCHE PATENTANMELDUNG

(11) **EP 3 854 484 A2**
(43) Veröffentlichungstag der Anmeldung: **28.07.2021**
(21) Anmeldenummer: 20200083.2
(22) Anmeldetag: 05.10.2020
(51) Int. Cl.: B02C 23/06, C09C 1/36

(54) **MAHLHILFSMITTEL ZUM MAHLEN VON TITANDIOXID**

(71) Anmelder: Kronos International, Inc., 51373 Leverkusen (DE)
(72) Erfinder: KOLMER-ANDERL, Nicole, 40764 Langenfeld (DE); SIEKMAN, Janine, 51465 Bergisch Gladbach (DE); MOLON, Marisuz, 42369 Wuppertal (DE); DOEDT, Sebastian, 58332 Schwelm (DE)

(57) **Zusammenfassung**

Die vorliegende Erfindung betrifft ein Mahlhilfsmittel zum Mahlen von Titandioxidpartikeln. Darüber hinaus richtet sich die vorliegende Erfindung auf ein Verfahren, bei dem ein Mahlhilfsmittel eingesetzt wird, sowie die Verwendung eines solchen Mahlhilfsmittels zum Mahlen von Titandioxidpartikeln.

## Beschreibung

### Gebiet der Erfindung

Die vorliegende Erfindung betrifft ein Mahlhilfsmittel zum Mahlen von Titandioxidpartikeln. Darüber hinaus richtet sich die vorliegende Erfindung auf ein Verfahren, bei dem ein Mahlhilfsmittel eingesetzt wird, sowie die Verwendung eines solchen Mahlhilfsmittels zum Mahlen von Titandioxidpartikeln.

### Technologischer Hintergrund der Erfindung

Titandioxid wird mittels des etablierten Chlorid- oder des Sulfatverfahrens hergestellt. Da das so erhaltene Titandioxid photokatalytisch aktiv ist, ist es für eine Vielfalt von Anwendungen ungeeignet. Daher wird es in Abhängigkeit von seiner Endanwendung einer Nachbehandlung unterzogen, wobei das Titandioxid mit ein oder mehreren Substanzen oftmals nasschemisch beschichtet wird. Anschließend wird das nachbehandelte Titandioxid getrocknet. Hierbei bilden sich Agglomerate, die anschließend wieder deagglomeriert werden müssen, wobei häufig eine Mühle wie eine Dampfmühle oder eine Rührwerkskugelmühle eingesetzt wird.

Die beschriebenen Verfahrensschritte werden in einer Anlage durchgeführt, die verschiedene Apparate und Rohrleitungen umfasst, in denen das Titandioxid behandelt und gefördert wird. Um einem Zusetzen der Anlage, insbesondere der Mühle, vorzubeugen, wird das Titandioxid mit einem Mahlhilfsmittel versetzt. Diese Mittel können an verschiedenen Stellen in die Anlage eingespeist werden, beispielsweise bei der Trocknung oder kurz bevor das Titandioxid der Mühle zugeführt wird.

Herkömmliche Mahlhilfsmittel wie Trimethylpropan (TMP) werden nun durch Behörden neu klassifiziert und unter anderem als krebserzeugend, erbgutverändernd, fruchtbarkeitsgefährdend und/oder umweltschädlich eingestuft. Somit können diese herkömmlichen Mahlhilfsmittel nicht mehr eingesetzt werden.

Es besteht somit im Stand der Technik der Bedarf an einem Mahlhilfsmittel, die unbedenklich verwendet werden können und nicht als krebserzeugend, erbgutverändernd und fruchtbarkeitsgefährdend und/oder umweltschädlich eingestuft werden. Ferner sollten diese Mahlhilfsmittel ein Zusetzen der Anlage, insbesondere einer Mühle, verhindern.

### Aufgabenstellung und Kurzbeschreibung der Erfindung

Der Erfindung liegt die technische Aufgabe zugrunde, ein Mahlhilfsmittel bereitzustellen, mit welchem zumindest ein Teil der genannten Nachteile des Stands der Technik überwunden werden kann.

Die technische Aufgabe wird durch ein erfindungsgemäßes Mahlhilfsmittel gelöst.

Daher richtet sich die Erfindung in einem ersten Aspekt auf ein Mahlhilfsmittel gemäß Anspruch 1.

In einem weiteren Aspekt betrifft die Erfindung ein Verfahren zum Mahlen von Titandioxidpartikel, bei dem ein Mahlhilfsmittel gemäß Anspruch 1 eingesetzt wird.

Schließlich betrifft Erfindung in einem noch weiteren Aspekt die Verwendung eines erfindungsgemäßen Mahlhilfsmittels gemäß Anspruch 1 zum Mahlen von Titandioxidpartikeln.

Weitere vorteilhafte Ausführungen der Erfindung sind in den Unteransprüchen angegeben.

### Beschreibung der Erfindung

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Numerische Bereiche, die in dem Format "von x bis y" angegeben sind, schließen die genannten Werte sowie die Werte ein, die im Bereich der dem Fachmann bekannten jeweiligen Messgenauigkeit liegen. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Die vorliegende Erfindung betrifft Mahlhilfsmittel zum Mahlen von Titandioxidpartikel. Das Mahlhilfsmittel ist hierbei ausgewählt aus der Liste bestehend aus Silicat; natürlichem Silicat, ausgenommen Asbest; natürliche, silylierte Kieselsäure, ausgenommen Asbest; silylierte Kieselsäure; silyliertes Siliciumdioxid; Bentonit; Zinkoxid; Kaolin; Kieselsäure; Bornitrid; Glimmer; Hydromagnesit; Wollastonit; Cristobalit; Talkum; Quarz; Dolomit; Huntit; Diatomeenerde; kalziniertes Kaolin; Manganpyrophosphit; Calciumhydroxid; Calciumoxid; Magnesiumhydroxid; Magnesiumoxid; Antimontrioxid; Kaliumhydroxid; Natriumhydroxid; Natriumsulfid; Zinksulfid; Molybdändisulfid; Natriumtetraborat; Eisenoxid; Kupferjodid; Aluminiumoxid; Siliciumdioxid; Natriumbisulfit; Natriumnitrit; Kaliumiodid; Natriumiodid; Schwefel; Natriumsulfit; Kaliumbromid; Natriumthiosulfat; Manganchlorid; Kupferbromid; Bariumnitrat; Calciumchlorid; Manganhypophosphit; Lithiumiodid; Aluminium-Magnesiumhydroxycarbonat; Manganoxid; Calciumsulfoaluminat; Bariumtetraborat; Ozocerit; Pyrophyllit; Hydrotalcit; Manganhydroxid; Eisenphosphid; Bariumhydroxid; Zinkhydroxid; Aluminiumhydroxid; Magnesium-Natrium-Fluoridsilikat; Titannitrid; Ozocerit; Salze der Acetylessigsäure; Monocarbonsäuren, C2-C24, aliphatische, geradkettige, aus natürlichen Fetten und Ölen, und deren Mono-, Di- und Triglycerinester (verzweigte Fettsäuren in natürlich vorkommenden Mengen sind eingeschlossen); Monocarbonsäuren, C2-C24, aliphatische, geradkettige, synthetische, und deren Mono-, Di- und Triglycerinester; Ester von aliphatischen Monocarbonsäuren (C6-C22) mit Polyglycerin; Alkohole, aliphatische, einwertige, gesättigte, geradkettige, primäre (C4-C24); Alkyl-Dimethylamine, linear mit gerader Anzahl von Kohlenstoffatomen (C12-C20); Alkyl(C8-C22)sulfonsäuren; Alkyl(C8-C22)schwefelsäuren, geradkettige, primäre, mit geradzahliger Kohlenstoffkette; N,N-Bis(2-hydroxyethyl)alkyl(C8-C18)amin; N,N-Bis(2-hydroxyethyl)alkyl(C8-C18)aminhydrochloride; Ethylhydroxymethylcellulose; Ethylhydroxypropylcellulose; Glycin, Salz ; Lysin, Salze; Methylhydroxymethylcellulos; Polyacrylsäure, Salze; Polyester von 1,2-Propandiol und/oder 1,3-und/oder 1,4-Butandiol und/oder Polypropylenglykol mit Adipinsäure, auch mit endständiger Essigsäure, oder C12-C18-Fettsäuren, oder n-Octanol und/oder n-Decanol; Polyethylenglycol (EO = 1-50)-monoalkylether (linear und verzweigt, C8-C20)-sulfat, Salze; Propylhydroxyethylcellulose; Propylhydroxymethylcellulose; Propylhydroxypropylcellulose; Sorbit; Ascorbinsäure; Hexadecyltrimethylammoniumbromid; Palmitinsäure; Stearinsäure; Ethylendiamintetraessigsäure; Benzoesäure; Salicylsäure; Campher; Citronensäure; Weinsäure; 2,2'-Methylenbis(4-ethyl-6-tert-butylphenol); o-Phthalsäure; Propyl-4-hydroxybenzoat; 4,4'-Thiobis(6-tert-butyl-3-methylphenol); 2,2'-Dihydroxy-5,5'-dichlordiphenylmethan; Methyl-4-hydroxybenzoat; Hexamethylentetramin; Caprolactam; 12-Hydroxystearinsäure; 2,4,6-Triamino-1,3,5-triazin; Bernsteinsäure; Maleinsäure; Fumarsäure; N,N'-Ethylen-bis-stearamid; N,N'-Ethylen-bis-oleamid; Glutarsäure; Erucasäure; Pentaerythrit; 2,2'-Methylenbis(4-methyl-6-tert-butylphenol); Benzophenon; Ethyl-4-hydroxybenzoat; Propylgallat; Triisopropanolamin; Lävulinsäure; Adipinsäure; Saccharoseoctaacetat; Dipentaerythritol; Diphenylsulfon; 2,6-Di-tert-butyl-p-kresol; 2,2'-Dihydroxy-4-methoxybenzophenon; 2,4-Dihydroxybenzophenon; 2-Hydroxy-4-methoxybenzophenon; Ascorbylpalmitat; Butyllactat; Malonsäure; Laurinsäure; Oxalsäure; Oleamid; n-Decansäure; Siliciumcarbid; Dicyandiamid; Arachidinsäure; Lignocerinsäure; 4,4'-Dihydroxybenzophenon; Octylgallat; Dodecylgallat; 1,2-Propylenglykolmonostearat; 4,4'-Bis(2-benzoxazolyl)stilben; 2-Hydroxy-4-n-octyloxybenzophenon; 2-(2'-Hydroxy-5'-methylphenyl)benzotriazol; Pyrophosphorsäure; Dioctadecyldisulfid; Crotonsäure; 2,6-Di-tert-butyl-4-ethylphenol; Isopropyl-4-hydroxybenzoat; Pentaerythritol-tetrakis[3-(3,5-di-tert-butyl-4-hydroxyphenyl)-propionat]; Apfelsäure; Montanwachs; Candelillawachs; Carnaubawachs; Carboxymethylcellulose; Cellulose; Celluloseacetobutyrat; Ethylcellulose; Ethylhydroxyethylcellulose; Methylethylcellulose; Hydroxyethylcellulose; Hydroxypropylcellulose; Methylhydroxypropylcellulose; Methylcellulose; Lebensmittelstärke; Hydroxyethylstärke; Alginsäure; 1,2-Propylenglykolalginat; Hydroxyethylmethylcellulose; Hydroxypropylstärke; alpha-Dextrin; Borsäure; Ascorbylstearat; Glycerin-tribehenat; Polyethylenglykol; Polypropylenglykol; Sorbitanmonopalmitat; Sorbitantristearat; Sorbitolmonostearat; 1,3,5-Tris(3,5-di-tert-butyl-4-hydroxybenzyl)-1,3,5-triazin-2,4,6(1H,3H,5H)-trion; Glycerinmonobehenat; Tris(2,4-di-tert-butylphenyl)ph osphit; Dibenzylidensorbit; Ethylcarboxymethylcellulose; Methylcarboxymethylcellulose; Hydroxymethylcellulose; Monoethyl-3,5-di-tert-butyl-4-hydroxy-benzylphosphonat, Calciumsalz; 1-(2-Hydroxyethyl)-4-hydroxy-2,2,6,6-tetramethylpiperidin-dimethylsuccinat, Copolymer; N-Methacryloyloxyethyl-N,N-dimethyl-N-carboxymethylammoniumchlorid, Natriumsalz-Octadecylmethacrylat-Ethylmethacrylat-Cyclohexylmethacrylat-N-Vinyl-2-pyrrolidon; Copolymere; Stärke, hydrolysiert; Polyethylenglykol(EO = 2-6)-monoalkyl (C16-C18)-ether; Cellulose, regeneriert; p-Kresol-dicyclopentadien-isobutylen, Copolymer; Bis(polyethylenglycol)hydroxymethyl-phosphonat; Polyethylenglycol-30-dipolyhydroxystearat; 2,2'-Oxamidobis[ethyl-3-(3,5-di-tert-butyl-4-hydroxyphenyl)propionat]; Poly[6-[(1,1,3,3-tetramethylbutyl)amino]-1,3,5-triazin-2,4-diyl]-[(2,2,6,6- tetramethyl-4-piperidyl)imino-hexamethylen-[(2,2,6,6-tetramethyl-4-piperidyl)imino]; Bis(4-ethylbenzyliden)sorbit; 2,2',2"-Nitrilo(triethyl-tris(3,3',5,5'-tetra-tert-butyl-1,1'-bi-phenyl-2,2'-diyl)phosphit); Bis(2,6-di-tert-butyl-4-methylphenyl)pentaerythritoldiphosphit; 2,2'-Methylen-bis(4,6-di-tert-butylphenyl)natriumphosphat; Bis(methylbenzyliden)sorbit; 2,4-Bis(octylthiomethyl)-6-methylphenol; 2,4-Bis(dodecylthiomethyl)-6-methylphenol; 2,2'-Ethyliden-bis(4,6-di-tert-butylphenyl)fluorphosphonit; Reaktionsprodukt von Di-tert-butylphosphonit mit Biphenyl, erzeugt durch Kondensation von 2,4-Di-tert-butylphenol mit dem Friedel-Crafts-Reaktionsprodukt aus Phosphortrichlorid und Biphenyl; 2,4-Di-tert-pentyl-6-[1-(3,5-di-tert-pentyl-2-hydroxyphenyl)ethyl]phenylacrylat; 3,3-Bis(methoxymethyl)-2,5-dimethylhexan; 2,4-Dimethyl-6-(1 -methylpentadecyl)phenol; Bis(3,4-dimethylbenzyliden)sorbit; 1,2-Bis(3-aminopropyl)ethylendiamin, Polymer mit N-Butyl-2,2,6,6-tetramethyl-4-piperidinamin und 2,4,6-Trichlor-1,3,5-triazin; N,N'-Dicyclohexyl-2,6-naphthalindicarboxamid; Pentaerythrit-tetrakis (2-cyan-3,3-diphenylacrylat); 9,9-Bis(methoxymethyl)fluoren; 1,3,5-Tris(4-benzoylphenol)benzol; Polydimethylsiloxan mit 3-Aminopropyl-Endgruppen, Polymer mit 1-Isocyanato-3-isocyanatomethyl-3,5,5-trimethylcyclohexan; 1,3,5-Tris(2,2-dimethylpropanamido)benzol; Hydrierte Homopolymere und/oder Copolymere, hergestellt aus 1-Hexen und/oder 1-Octen und/oder 1-Decen und/oder 1-Dodecen und/oder 1-Tetradecen (Molekulargewicht: 440 bis 12 000); N,N'-Bis(2,2,6,6-tetramethyl-4- piperidyl)-N,N'-diformylhexamethylendiamin; 2,2'-(1,4-Phenylen)bis((4H-3,1 -benzoxazin-4-on); Polyester aus Adipinsäure mit 1,3-Butandiol, 1,2-Propandiol und 2-Ethyl-1-hexanol; Polyethylenglycolether (EO = 1-50) von linearen und verzweigten primären Alkoholen (C8-C22); Aliphatische lineare C2-C24-Monocarbonsäuren aus natürlichen Ölen und Fetten, Lithiumsalz; Sekundäre Alkohole, C12-C14, beta-(2-hydroxyethoxy), ethoxyliert; alpha-Alkene(C20-C24), Copolymer mit Maleinsäureanhydrid, Reaktionsprodukt mit 4-Amino-2,2,6,6-tetramethylpiperidin; Bis(4-propylbenzyliden)propylsorbitol; Neopentylglycol, Diester und Monoester mit Benzoesäure und 2-Ethylhexansäure; oxidierte Polyethylenwachse; Sulfobernsteinsäure, Alkyl (C4-C20) oder Cyclohexyldiester, Salze; Sulfobernsteinsäure Monoalkyl (C10-C16) polyethylenglycolester, Salze; cis-1,2-Cyclohexandicarbonsäure, Salze; cis-endo-bicyclo[2.2.1]heptan-2,3-dicarbonsäure, Salze; Neodecansäure, Salze; Pimelinsäure, Salze; Stearoyl-2-lactylat, Salze; N,N',N"-Tris(2-methylcyclohexyl)-1,2,3-propan-tricarboxamid; Poly(12-hydroxystearinsäure)-stearat; Fettsäuren (C8-C22) aus tierischen oder pflanzlichen Fetten und Ölen, Ester mit einwertigen, primären, gesättigten, aliphatischen, C3-C22-verzweigten Alkoholen; Fettsäuren (C8-C22) aus tierischen oder pflanzlichen Fetten und Ölen, Ester mit linearen, einwertigen, primären, gesättigten, aliphatischen Alkoholen (C1-C22); Fettsäuren (C8-C22), Ester mit Pentaerythrit und Mischungen davon. Diese erfindungsgemäßen Mahlhilfsmittel weisen allesamt gute Mahlhilfseigenschaften auf. Die erfindungsgemäßen Mahlhilfsmittel reduzieren den Förderdruck, beugen einem Zusetzen der Produktionsanlagen, insbesondere der Mühle, in dem die Partikel gemahlen werden, vor und erhöhen die Leistung einer solchen Mühle. Sie verbessern darüber hinaus die Fließeigenschaften in Kunststoffen und die Kompatibilität in bestimmten Matrizes.

In einer bevorzugten Ausführungsform ist das Mahlhilfsmittel zum Mahlen von Titandioxidpartikeln anorganisch und ausgewählt aus der Gruppe bestehend aus Silicat; natürlichem Silicat, ausgenommen Asbest; natürliche, silylierte Kieselsäure, ausgenommen Asbest; silylierte Kieselsäure; silyliertes Siliciumdioxid; Bentonit; Zinkoxid; Kaolin; Kieselsäure; Bornitrid; Glimmer; Hydromagnesit; Wollastonit; Cristobalit; Talkum; Quarz; Dolomit; Huntit; Diatomeenerde; kalziniertes Kaolin; Manganpyrophosphit; Calciumhydroxid; Calciumoxid; Magnesiumhydroxid; Magnesiumoxid; Antimontrioxid; Kaliumhydroxid; Natriumhydroxid; Natriumsulfid; Zinksulfid; Molybdändisulfid; Natriumtetraborat; Eisenoxid; Kupferjodid; Aluminiumoxid; Siliciumdioxid; Natriumsulfat; Natriumnitrit; Kaliumiodid; Natriumiodid; Schwefel; Natriumsulfit; Kaliumbromid; Natriumthiosulfat; Manganchlorid; Kupferbromid; Bariumnitrat; Calciumchlorid; Manganhypophosphit; Lithiumiodid; Aluminium-Magnesiumhydroxycarbonat; Manganoxid; Calciumsulfoaluminat; Bariumtetraborat; Pyrophyllit; Hydrotalcit; Manganhydroxid; Eisenphosphid; Bariumhydroxid; Zinkhydroxid; Aluminiumhydroxid; Magnesium-Natrium-Fluoridsilikat; Titannitrid und Mischungen davon. Diese anorganischen Mahlhilfsmittel weisen den Vorteil gegenüber organischen Mahlhilfsmitteln auf, dass die organischen Mahlhilfsmittel, bei erhöhter Temperatur zur Zersetzung neigen und/oder aufgrund Ihrer krebserzeugenden, erbgutverändernden, fruchtbarkeitsgefährdenden und/oder umweltschädlich Eigenschaften nachteilig sind. Die Verwendung birgt die Gefahr, dass die Mittel in das Abwasser gelangen. Deshalb müssen herkömmliche, organische Mahlhilfsmittel gegebenenfalls nach der Mahlung entfernt und gesondert entsorgt werden, wobei zusätzliche Verfahrensschritte notwendig sind, die kosten- und zeitintensiv sind. Eine Entfernung der anorganischen Mittel ist nicht notwendig, da sie nicht diese Nachteile aufweisen. Sie sind ferner temperaturstabiler als übliche, organische Mahlhilfsmittel und dispergieren die Partikel zu einem hohen Grad und verhindern somit eine Agglomeration und folglich das Zusetzen der Anlage. Manche der hierin offenbarten, anorganischen Mahlhilfsmittel sind bereits als Bestandteil von Titandioxid-enthaltenden Kompositen bekannt, werden jedoch in anderen Mengen eingesetzt und nicht zur Mahlung verwendet.

Besonders bevorzugte Mahlhilfsmittel sind anorganisch und ausgewählt aus der Gruppe bestehend aus Silicat; natürlichem Silicat, ausgenommen Asbest; natürliche, silylierte Kieselsäure, ausgenommen Asbest; silylierte Kieselsäure; silyliertes Siliciumdioxid; Bentonit; Zinkoxid; Kaolin; Kieselsäure; Bornitrid; Glimmer; Hydromagnesit; Wollastonit; Cristobalit; Talkum; Quarz; Dolomit; Huntit; Diatomeenerde; kalziniertes Kaolin und Mischungen davon. Diese Mahlhilfsmittel weisen besonderes gute Mahleigenschaften und optische Eigenschaften auf.

Die zu mahlenden Titandioxidpartikel können nach dem Sulfat- oder Chloridprozess erhalten werden. Ferner können die Partikel einer Nachbehandlung unterzogen werden, die dem Fachmann bekannt sind. Vorzugsweise sind die Titandioxidpartikel Titandioxidpigmente und weisen eine Größe d(50m) von 200 bis 500 nm auf, vorzugsweise von 200 bis 400 nm. Vorzugsweise weisen eine Größe d(50m) von 200 bis 500 nm auf, vorzugsweise von 200 bis 400 nm und sind sphärisch. Unter der mittleren Partikelgröße wird im Rahmen der Erfindung der massebezogene Median d50 (auch d50m) verstanden. Neben den Titandioxidpartikeln können grundsätzlich die erfindungsgemäßen Mahlhilfsmittel auch bei der Mahlung andere Metalloxide eingesetzt werden. Hierzu zählen Oxide des Siliciums, Zinns, Zirkons, Aluminiums, Strontiums, Eisens, Kupfers, Magnesiums, Hafniums sowie Mischungen davon. In einem anderen Aspekt betrifft die Erfindung ein Verfahren zum Mahlen von Titandioxidpartikeln.

Die Mahlung kann in einer herkömmlichen Mühle erfolgen wie in einer Dampfmühle oder einer Rührwerkskugelmühle.

In einer bevorzugten Ausführungsform werden 0,001 bis 10 Gew.%, bevorzugt 0,01 bis 5 Gew.%, noch bevorzugter 0,05 bis 2 Gew.%, sogar noch bevorzugter 0,1 bis 1,5 Gew.% oder 0,1 bis 0,8 Gew.% und am bevorzugtesten 0,1 bis 0,5 Gew.% des Mahlhilfsmittels basierend auf dem Gewicht der Titandioxidpartikel eingesetzt.

Das Mahlhilfsmittel weist eine Größe (d50m) von 0,5 bis 100 µm, bevorzugt 1 bis 50 µm und noch bevorzugter 2 bis 25 µm auf.

In einem anderen Aspekt der Erfindung ist die Verwendung des erfindungsgemäßen Mahlhilfsmittels zum Mahlen von Titandioxidpartikeln.

### Testmethoden

### Partikelgrößenverteilung und massebezogener Median d50m

Die Partikelgrößenverteilung und der massebezogene Median d50m wurde mittels Laserbeugung mit dem Mastersizer 2000 der Fa. Malvern gemessen. Für die Messung wurde eine Suspension aus 80 ml Natriumtripolyphosphat-Lösung (0,06 Gew.-% in destilliertem Wasser) mit 2 g des zu untersuchenden Partikelmaterials für 60 sec mit einem Ultraturrax-Rührer bei 9500 rpm dispergiert. Die Messung wurde bei folgenden Geräteeinstellungen durchgeführt: Brechungsindex (n) Medium: 1,33, Brechnungsindex (n) Probe: 2,741 (rot) und 2,960 (blau), Absorptionsindex (k) Probe: 0,08 (rot) und 0,08 (blau), Laserabschattung: 0,8%.

### Bestimmung der Größe des Mahlhilfsmittels

Die Größe wurde mittels Laserbeugung nach ISO 13320-1 bestimmt.

## Patentansprüche

1. Mahlhilfsmittel zum Mahlen von Titandioxidpartikeln, **dadurch gekennzeichnet, dass** das Mahlhilfsmittel ausgewählt ist aus der Liste bestehend aus Silicat; natürlichem Silicat, ausgenommen Asbest; natürliche, silylierte Kieselsäure, ausgenommen Asbest; silylierte Kieselsäure; silyliertes Siliciumdioxid; Bentonit; Zinkoxid; Kaolin; Kieselsäure; Bornitrid; Glimmer; Hydromagnesit; Wollastonit; Cristobalit; Talkum; Quarz; Dolomit; Huntit; Diatomeenerde; kalziniertes Kaolin; Manganpyrophosphit; Calciumhydroxid; Calciumoxid; Magnesiumhydroxid; Magnesiumoxid; Antimontrioxid; Kaliumhydroxid; Natriumhydroxid; Natriumsulfid; Zinksulfid; Molybdändisulfid; Natriumtetraborat; Eisenoxid; Kupferjodid; Aluminiumoxid; Siliciumdioxid; Natriumsulfat; Natriumnitrit; Kaliumiodid; Natriumiodid; Schwefel; Natriumsulfit; Kaliumbromid; Natriumthiosulfat; Manganchlorid; Kupferbromid; Bariumnitrat; Calciumchlorid; Manganhypophosphit; Lithiumiodid; Aluminium-Magnesiumhydroxycarbonat; Manganoxid; Calciumsulfoaluminat; Bariumtetraborat; Pyrophyllit; Hydrotalcit; Manganhydroxid; Eisenphosphid; Bariumhydroxid; Zinkhydroxid; Aluminiumhydroxid; Magnesium-Natrium-Fluoridsilikat; Titannitrid, Ozocerit; Salze der Acetylessigsäure; Monocarbonsäuren, C2-C24, aliphatische, geradkettige, aus natürlichen Fetten und Ölen, und deren Mono-, Di- und Triglycerinester (verzweigte Fettsäuren in natürlich vorkommenden Mengen sind eingeschlossen); Monocarbonsäuren, C2-C24, aliphatische, geradkettige, synthetische, und deren Mono-, Di- und Triglycerinester; Ester von aliphatischen Monocarbonsäuren (C6-C22) mit Polyglycerin; Alkohole, aliphatische, einwertige, gesättigte, geradkettige, primäre (C4-C24); Alkyl-Dimethylamine, linear mit gerader Anzahl von Kohlenstoffatomen (C12-C20); Alkyl(C8-C22)sulfonsäuren; Alkyl(C8-C22)schwefelsäuren, geradkettige, primäre, mit geradzahliger Kohlenstoffkette; N,N-Bis(2-hydroxyethyl)alkyl(C8-C18)amin; N,N-Bis(2-hydroxyethyl)alkyl(C8-C18)aminhydrochloride; Ethylhydroxymethylcellulose; Ethylhydroxypropylcellulose; Glycin, Salz ; Lysin, Salze; Methylhydroxymethylcellulos; Polyacrylsäure, Salze; Polyester von 1,2-Propandiol und/oder 1,3-und/oder 1,4-Butandiol und/oder Polypropylenglykol mit Adipinsäure, auch mit endständiger Essigsäure, oder C12-C18-Fettsäuren, oder n-Octanol und/oder n-Decanol; Polyethylenglycol (EO = 1-50)-monoalkylether (linear und verzweigt, C8-C20)-sulfat, Salze; Propylhydroxyethylcellulose; Propylhydroxymethylcellulose; Propylhydroxypropylcellulose; Sorbit; Ascorbinsäure; Hexadecyltrimethylammoniumbromid; Palmitinsäure; Stearinsäure; Ethylendiamintetraessigsäure; Benzoesäure; Salicylsäure; Campher; Citronensäure; Weinsäure; 2,2'-Methylenbis(4-ethyl-6-tert-butylphenol); o-Phthalsäure; Propyl-4-hydroxybenzoat; 4,4'-Thiobis(6-tert-butyl-3-methylphenol); 2,2'-Dihydroxy-5,5'-dichlordiphenylmethan; Methyl-4-hydroxybenzoat; Hexamethylentetramin; Caprolactam; 12-Hydroxystearinsäure; 2,4,6-Triamino-1,3,5-triazin; Bernsteinsäure; Maleinsäure; Fumarsäure; N,N'-Ethylen-bis-stearamid; N,N'-Ethylen-bis-oleamid; Glutarsäure; Erucasäure; Pentaerythrit; 2,2'-Methylenbis(4-methyl-6-tert-butylphenol); Benzophenon; Ethyl-4-hydroxybenzoat; Propylgallat; Triisopropanolamin; Lävulinsäure; Adipinsäure; Saccharoseoctaacetat; Dipentaerythritol; Diphenylsulfon; 2,6-Di-tert-butyl-p-kresol; 2,2'-Dihydroxy-4-methoxybenzophenon; 2,4-Dihydroxybenzophenon; 2-Hydroxy-4-methoxybenzophenon; Ascorbylpalmitat; Butyllactat; Malonsäure; Laurinsäure; Oxalsäure; Oleamid; n-Decansäure; Siliciumcarbid; Dicyandiamid; Arachidinsäure; Lignocerinsäure; 4,4'-Dihydroxybenzophenon; Octylgallat; Dodecylgallat; 1,2-Propylenglykolmonostearat; 4,4'-Bis(2-benzoxazolyl)stilben; 2-Hydroxy-4-n-octyloxybenzophenon; 2-(2'-Hydroxy-5'-methylphenyl)benzotriazol; Pyrophosphorsäure; Dioctadecyldisulfid; Crotonsäure; 2,6-Di-tert-butyl-4-ethylphenol; Isopropyl-4-hydroxybenzoat; Pentaerythritol-tetrakis[3-(3,5-di-tert-butyl-4-hydroxyphenyl)-propionat]; Apfelsäure; Montanwachs; Candelillawachs; Carnaubawachs; Carboxymethylcellulose; Cellulose; Celluloseacetobutyrat; Ethylcellulose; Ethylhydroxyethylcellulose; Methylethylcellulose; Hydroxyethylcellulose; Hydroxypropylcellulose; Methylhydroxypropylcellulose; Methylcellulose; Lebensmittelstärke; Hydroxyethylstärke; Alginsäure; 1,2-Propylenglykolalginat; Hydroxyethylmethylcellulose; Hydroxypropylstärke; alpha-Dextrin; Borsäure; Ascorbylstearat; Glycerin-tribehenat; Polyethylenglykol; Polypropylenglykol; Sorbitanmonopalmitat; Sorbitantristearat; Sorbitolmonostearat; 1,3,5-Tris(3,5-di-tert-butyl-4-hydroxybenzyl)-1 ,3,5-triazin-2,4,6(1 H,3H,5H)-trion; Glycerinmonobehenat; Tris(2,4-di-tert-butylphenyl)phosphit; Dibenzylidensorbit; Ethylcarboxymethylcellulose; Methylcarboxymethylcellulose; Hydroxymethylcellulose; Monoethyl-3,5-di-tert-butyl-4-hydroxy-benzylphosphonat, Calciumsalz; 1-(2-Hydroxyethyl)-4-hydroxy-2,2,6,6-tetramethylpiperidin-dimethylsuccinat, Copolymer; N-Methacryloyloxyethyl-N,N-dimethyl-N-carboxymethylammoniumchlorid, Natriumsalz-Octadecylmethacrylat-Ethylmethacrylat-Cyclohexylmethacrylat-N-Vinyl-2-pyrrolidon, Copolymere; Stärke, hydrolysiert; Polyethylenglykol(EO = 2-6)-monoalkyl (C16-C18)-ether; Cellulose, regeneriert; p-Kresol-dicyclopentadien-isobutylen, Copolymer; Bis(polyethylenglycol)hydroxymethyl-phosphonat; Polyethylenglycol-30-dipolyhydroxystearat; 2,2'-Oxamidobis[ethyl-3-(3,5-di-tert-butyl-4-hydroxyphenyl)propionat]; Poly[6-[(1,1,3,3-tetramethylbutyl)amino]-1,3,5-triazin-2,4-diyl]-[(2,2,6,6- tetramethyl-4-piperidyl)imino-hexamethylen-[(2,2,6,6-tetramethyl-4-piperidyl)imino]; Bis(4-ethylbenzyliden)sorbit; 2,2',2"-Nitrilo(triethyl-tris(3,3',5,5'-tetra-tert-butyl-1,1'-bi-phenyl-2,2'-diyl)phosphit); Bis(2,6-di-tert-butyl-4-methylphenyl)pentaerythritoldiphosphit; 2,2'-Methylen-bis(4,6-di-tert-butylphenyl)natriumphosphat; Bis(methylbenzyliden)sorbit; 2,4-Bis(octylthiomethyl)-6-methylphenol; 2,4-Bis(dodecylthiomethyl)-6-methylphenol; 2,2'-Ethyliden-bis(4,6-di-tert-butylphenyl)fluorphosphonit; Reaktionsprodukt von Di-tert-butylphosphonit mit Biphenyl, erzeugt durch Kondensation von 2,4-Di-tert-butylphenol mit dem Friedel-Crafts-Reaktionsprodukt aus Phosphortrichlorid und Biphenyl; 2,4-Di-tert-pentyl-6-[1-(3,5-di-tert-pentyl-2-hydroxyphenyl)ethyl]phenylacrylat; 3,3-Bis(methoxymethyl)-2,5-dimethylhexan; 2,4-Dimethyl-6-(1-methylpentadecyl)phenol; Bis(3,4-dimethylbenzyliden)sorbit; 1,2-Bis(3-aminopropyl)ethylendiamin, Polymer mit N-Butyl-2,2,6,6-tetramethyl-4-piperidinamin und 2,4,6-Trichlor-1,3,5-triazin; N,N'-Dicyclohexyl-2,6-naphthalindicarboxamid; Pentaerythrit-tetrakis (2-cyan-3,3-diphenylacrylat); 9,9-Bis(methoxymethyl)fluoren; 1,3,5-Tris(4-benzoylphenol)benzol; Polydimethylsiloxan mit 3-Aminopropyl-Endgruppen, Polymer mit 1-Isocyanato-3-isocyanatomethyl-3,5,5-trimethylcyclohexan; 1,3,5-Tris(2,2-dimethylpropanamido)benzol; Hydrierte Homopolymere und/oder Copolymere, hergestellt aus 1-Hexen und/oder 1-Octen und/oder 1-Decen und/oder 1-Dodecen und/oder 1-Tetradecen (Molekulargewicht: 440 bis 12 000); N,N'-Bis(2,2,6,6-tetramethyl-4- piperidyl)-N,N'-diformylhexamethylendiamin; 2,2'-(1,4-Phenylen)bis((4H-3,1-benzoxazin-4-on); Polyester aus Adipinsäure mit 1,3-Butandiol, 1,2-Propandiol und 2-Ethyl-1-hexanol; Polyethylenglycolether (EO = 1-50) von linearen und verzweigten primären Alkoholen (C8-C22); Aliphatische lineare C2-C24-Monocarbonsäuren aus natürlichen Ölen und Fetten, Lithiumsalz; Sekundäre Alkohole, C12-C14, beta-(2-hydroxyethoxy), ethoxyliert; alpha-Alkene(C20-C24), Copolymer mit Maleinsäureanhydrid, Reaktionsprodukt mit 4-Amino-2,2,6,6-tetramethylpiperidin; Bis(4-propylbenzyliden)propylsorbitol; Neopentylglycol, Diester und Monoester mit Benzoesäure und 2-Ethylhexansäure; oxidierte Polyethylenwachse; Sulfobernsteinsäure, Alkyl (C4-C20) oder Cyclohexyldiester, Salze; Sulfobernsteinsäure Monoalkyl (C10-C16) polyethylenglycolester, Salze; cis-1,2-Cyclohexandicarbonsäure, Salze; cis-endo-bicyclo[2.2.1]heptan-2,3-dicarbonsäure, Salze; Neodecansäure, Salze; Pimelinsäure, Salze; Stearoyl-2-lactylat, Salze; N,N',N"-Tris(2-methylcyclohexyl)-1,2,3-propan-tricarboxamid; Poly(12-hydroxystearinsäure)-stearat; Fettsäuren (C8-C22) aus tierischen oder pflanzlichen Fetten und Ölen, Ester mit einwertigen, primären, gesättigten, aliphatischen, C3-C22-verzweigten Alkoholen; Fettsäuren (C8-C22) aus tierischen oder pflanzlichen Fetten und Ölen, Ester mit linearen, einwertigen, primären, gesättigten, aliphatischen Alkoholen (C1-C22); Fettsäuren (C8-C22), Ester mit Pentaerythrit und Mischungen davon.

2. Mahlhilfsmittel zum Mahlen von Titandioxidpartikeln nach Anspruch 1, **dadurch gekennzeichnet, dass** das Mahlhilfsmittel anorganisch ist und ausgewählt ist aus der Gruppe bestehend aus Silicat; natürlichem Silicat, ausgenommen Asbest; natürliche, silylierte Kieselsäure, ausgenommen Asbest; silylierte Kieselsäure; silyliertes Siliciumdioxid; Bentonit; Zinkoxid; Kaolin; Kieselsäure; Bornitrid; Glimmer; Hydromagnesit; Wollastonit; Cristobalit; Talkum; Quarz; Dolomit; Huntit; Diatomeenerde; kalziniertes Kaolin; Manganpyrophosphit; Calciumhydroxid; Calciumoxid; Magnesiumhydroxid; Magnesiumoxid; Antimontrioxid; Kaliumhydroxid; Natriumhydroxid; Natriumsulfid; Zinksulfid; Molybdändisulfid; Natriumtetraborat; Eisenoxid; Kupferjodid; Aluminiumoxid; Siliciumdioxid; Natriumbisulfit; Natriumnitrit; Kaliumiodid; Natriumiodid; Schwefel; Natriumsulfit; Kaliumbromid; Natriumthiosulfat; Manganchlorid; Kupferbromid; Bariumnitrat; Calciumchlorid; Manganhypophosphit; Lithiumiodid; Aluminium-Magnesiumhydroxycarbonat; Manganoxid; Calciumsulfoaluminat; Bariumtetraborat; Ozocerit; Pyrophyllit; Hydrotalcit; Manganhydroxid; Eisenphosphid; Bariumhydroxid; Zinkhydroxid; Aluminiumhydroxid; Magnesium-Natrium-Fluoridsilikat; Titannitrid und Mischungen davon.

3. Mahlhilfsmittel zum Mahlen von Titandioxidpartikeln nach Anspruch 1 oder 2, **dadurch gekennzeichnet, dass** das Mahlhilfsmittel anorganisch ist und ausgewählt ist aus der Gruppe bestehend aus Silicat; natürlichem Silicat, ausgenommen Asbest; natürliche, silylierte Kieselsäure, ausgenommen Asbest; silylierte Kieselsäure; silyliertes Siliciumdioxid; Bentonit; Zinkoxid; Kaolin; Kieselsäure; Bornitrid; Glimmer; Hydromagnesit; Wollastonit; Cristobalit; Talkum; Quarz; Dolomit; Huntit; Diatomeenerde; kalziniertes Kaolin und Mischungen davon.

4. Mahlhilfsmittel zum Mahlen von Titandioxidpartikeln nach einem der Ansprüche 1 bis 3, **dadurch gekennzeichnet, dass** das Mahlhilfsmittel eine Größe (d50m) von 0,5 bis 100 µm, bevorzugt 1 bis 50 µm und noch bevorzugter 2 bis 25 µm aufweist.

5. Verfahren zum Mahlen von Titandioxidpartikeln, **dadurch gekennzeichnet, dass** ein Mahlhilfsmittel nach einem der Ansprüche 1 bis 4 eingesetzt wird.

6. Verfahren zum Mahlen von Titandioxidpartikeln nach Anspruch 5, **dadurch gekennzeichnet, dass** 0,001 bis 10 Gew.%, bevorzugt 0,01 bis 5 Gew.% und noch bevorzugter 0,1 bis 1 Gew.% des Mahlhilfsmittels basierend auf dem Gewicht der Titandioxidpartikel eingesetzt wird.

7. Verfahren zum Mahlen nach einem der Ansprüche 5 oder 6, **dadurch gekennzeichnet, dass** die Titandioxidpartikel Titandioxidpigmente sind.

8. Verwendung eines Mahlhilfsmittels nach Anspruch 1 bis 4 zum Mahlen von Titandioxidpartikeln.
